# EUROPEAN PATENT APPLICATION

(11) **EP 4 729 155 A1**
(43) Date of publication of application: **22.04.2026**
(21) Application number: 24206678.5
(22) Date of filing: 15.10.2024
(51) Int. Cl.: B01D 53/94, B01J 23/63, B01J 35/57, B01J 37/02, B01J 37/14, F01N 3/035

(54) **CATALYTIC GASOLINE PARTICULATE FILTER**

(71) Applicant: Johnson Matthey Public Limited Company, London EC2V 7AD (GB)
(72) Inventor: CLOWES, Lucy, Royston, SG8 5HE (GB); TURNER, John, Royston, SG8 5HE (GB); WALTON, Mark, Royston, SG8 5HE (GB); WARREN, Sarah Louise, Royston, SG8 5HE (GB)
(74) Representative: Boult Wade Tennant LLP

(57) **Abstract**

Provided is a catalytic gasoline particulate filter (GPF) for the treatment of exhaust gas from a gasoline engine, the catalytic GPF comprising:
a wall-flow filter substrate; and
a first coating disposed on the wall-flow filter substrate, wherein the first coating comprises:
an inorganic oxide support;
an oxygen storage capacity (OSC) material;
a platinum group metal (PGM) component; and
an Fe component;

wherein the first coating comprises from 0.05 to 1.5 wt.% of the Fe component, calculated based on the total weight of Fe in the Fe component relative to the total weight of the inorganic oxide support and OSC material. The first coating is able to provide an excellent balance of improved oxygen storage capacity and catalytic activity, even after ageing, without significantly increasing the backpressure caused by the catalytic GPF in use.

## Description

The present invention relates to a catalytic gasoline particulate filter (GPF) for the treatment of exhaust gas from a gasoline engine, a method of its manufacture, an emission treatment system and a method of treating an exhaust gas from a gasoline engine. The catalytic GPF includes a first coating that is able to provide an excellent balance of improved oxygen storage capacity and catalytic activity, even after ageing, without significantly increasing the backpressure caused by the catalytic GPF in use.

GPFs are an emission after-treatment technology developed to control particulate emissions from gasoline direct injection (GDI) engines.

Most early GPF applications included an uncoated GPF positioned downstream of a three-way catalyst (TWC). As the technology matured, GPFs have been coated with a three-way catalyst. See, for example, US2009/0193796A1, US2010/0239478A1, US2019/0009254A1, US 2019/0168162A1, and US 2020/0353410A1. However, the combination of the TWC washcoat on a filter body does introduce additional issues such as undue back-pressure, and there are requirements for minimum CO, NOₓ and HC conversion properties. In addition, there are cost considerations with a need to provide the best possible balance of performance to cost.

There is a continued need for improving technologies to effectively convert CO, NOₓ and HC and to reduce particulate matters in exhaust gas from a gasoline engine, without compromising on backpressure, i.e., without significantly increasing the backpressure caused by the GPF.

The present invention seeks to tackle at least some of the problems associated with the prior art or at least to provide a commercially acceptable alternative solution thereto. In particular, it is an object of the present invention to provide a catalytic GPF having improved oxygen storage capacity and/or (TWC) catalytic activity, even after ageing, without significantly increasing the backpressure caused by the catalytic GPF in use.

The present invention provides a catalytic GPF for the treatment of exhaust gas from a gasoline engine, a method of manufacturing a catalytic GPF for the treatment of exhaust gas from a gasoline engine, an emission treatment system and a method of treating an exhaust gas from a gasoline engine according to the claims appended hereto.

Specifically, in a first aspect the present invention provides a catalytic gasoline particulate filter (GPF) for the treatment of exhaust gas from a gasoline engine, the catalytic GPF comprising:
a wall-flow filter substrate; and
a first coating disposed on the wall-flow filter substrate, wherein the first coating comprises:
   an inorganic oxide support;
   an oxygen storage capacity (OSC) material;
   a platinum group metal (PGM) component; and
   an Fe component;
wherein the first coating comprises from 0.05 to 1.5 wt.% of the Fe component, calculated based on the total weight of Fe in the Fe component relative to the total weight of the inorganic oxide support and OSC material.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

The inventors have surprisingly found that a catalytic GPF having such a first coating can provide improved oxygen storage capacity and/or (TWC) catalytic activity, even after ageing, without significantly increasing the backpressure caused by the catalytic GPF in use, i.e. relative to a catalytic GPF having a first coating that does not contain the additional Fe component. In particular, it has been found that the presence of the Fe component in the required amounts can provide improved oxygen storage capacity and/or (TWC) catalytic activity, even after ageing, without significantly increasing the backpressure caused by the catalytic GPF in use, i.e. relative to a catalytic GPF having a first coating that does not contain the additional Fe component.

Typically, it would be thought that increasing the content of a catalytic metal, such as Fe, would increase the catalytic activity of the catalyst article. However, it has surprisingly been found that, in a catalytic GPF, such low concentrations of Fe may actually provide improved oxygen storage capacity and/or (TWC) catalytic activity, even after ageing. It has also been found that such a coating may have increased thermal stability, which, without wishing to be bound by theory, is thought to contribute to the catalytic performance of the catalytic GPF after hydrothermal ageing.

Moreover, since only small amounts of the additional Fe component are required, the backpressure imparted by the catalytic GPF may be suitably low for use in practice, i.e. not significantly higher than for conventional catalytic GPFs. By contrast, previously, it has been difficult to achieve adequate catalytic activity for catalytic GPFs having appropriate backpressure levels. In other words, catalytic activity is typically compromised when attempting to provide GPFs that would impart suitable backpressure on the emission treatment system.

Moreover, advantageously, without wishing to be bound by theory, it is thought that the invention is not limited to the type of support material used in the coating of the catalytic GPF. That is, the Fe component can be provided independently of the support material(s).

It has also been seen that the catalytic GPF may reduce secondary emissions, such as N₂O and NH₃.

The term "wall-flow filter" is a term of art well known to the skilled reader. Any suitable wall-flow filter substrate may be used in the present invention. For example, the wall-flow filter substrate can be a ceramic, e.g., silicon carbide, cordierite, aluminium nitride, silicon nitride, aluminium titanate, alumina, mullite, pollucite, or composites comprising segments of any two or more thereof. Cordierite, a magnesium aluminosilicate, and silicon carbide are particularly preferred.

The wall-flow filter substrate may typically comprise porous walls and comprise a first face and a second face defining a longitudinal direction therebetween and first and second pluralities of channels extending in the longitudinal direction, wherein the first plurality of channels is open at the first face and closed at the second face, wherein the second plurality of channels is open at the second face and closed at the first face, wherein the first plurality of channels provide a first plurality of inner surfaces and wherein the second plurality of channels provide a second plurality of inner surfaces.

The (uncoated) wall-flow filter substrate suitable for use in the present invention typically has a mean pore size of from 8 to 45 µm, for example 8 to 25 µm, or 10 to 20 µm. Pore size is well known in the art and appropriate measurement techniques are known to a person skilled in the art. The wall-flow filter substrate may have a porosity of 40 to 75%, such as 45 to 70%. The mean pore size may be determined using mercury porosimetry and x-ray tomography according to conventional methods.

The wall-flow filter substrate typically comprises a cell density of from 60 to 400 cells per square inch (cpsi). It is preferred that the wall-flow filter substrate comprises a cell density of from 100 to 350 cpsi, more preferably from 200 to 300 cpsi. The wall-flow filter substrate monolith may have a wall thickness (e.g. average internal wall thickness) of from 0.20 to 0.50 mm, preferably from 0.25 to 0.35 mm (e.g. about 0.30 mm). Generally, the uncoated wall flow filter substrate monolith has a porosity of from 50 to 80 %, preferably 55 to 75 %, and more preferably 60 to 70 %. The wall flow filter substrate may have a symmetric cell design or an asymmetric cell design. The wall-flow filter substrate may have dimensions of, for example, from 120 to 160 mm (diameter) × from 100 to 130 mm (length), such as about 143 mm (diameter) × about 118.1 mm (length).

The first coating is disposed on the wall-flow filter substrate. The term "disposed on" as used herein may encompass both having the coating directly disposed on the substrate, i.e. with no intervening material, and/or indirectly disposed on the substrate, i.e. with intervening material. The term "disposed on" encompasses having the first coating disposed on the first plurality of inner surfaces and/or the second plurality of inner surfaces (i.e. be located "on wall"). The term "disposed on" may also encompass having the first coating disposed therein, for example within the pores of the substrate (e.g. within the porous walls). In other words, the term "disposed on" the substrate means that the first coating may be disposed thereon and/or therein. In other words, the coating may be "in wall", "on wall", or both "in wall" and "on wall".

Preferably, the wall-flow filter substrate has a length L and the first coating is disposed on from 1 to 100% of the length L of the wall-flow filter substrate from one end (the inlet end) and/or the first coating is disposed on from 1 to 100% of the length L of the wall-flow filter substrate from the other end (the outlet end). More preferably, the first coating is disposed on from 10 to 90% of the length L of the wall-flow filter substrate from one end (the inlet end) and/or the first coating is disposed on from 10 to 90% of the length L of the wall-flow filter substrate from the other end (the outlet end). Even more preferably, the first coating is disposed on from 30 to 70% of the length L of the wall-flow filter substrate from one end (the inlet end) and/or the first coating is disposed on from 30 to 70% of the length L of the wall-flow filter substrate from the other end (the outlet end). Still more preferably, the first coating is disposed on from 45 to 65% of the length L of the wall-flow filter substrate from one end (the inlet end) and/or the first coating is disposed on from 45 to 65% of the length L of the wall-flow filter substrate from the other end (the outlet end).

The relative terms "first", "second", etc. as used herein are simply labels used in order to distinguish the layers and are not intended to indicate the relative arrangement of the coatings or other features, unless stated otherwise.

It is preferable that the "coating" has a substantially uniform composition (i.e. there is no substantial difference in the composition of the washcoat when comparing one part of the region occupied by the coating with another part of that region, on average). Substantially uniform composition in this context refers to a material (e.g., region) where the difference in composition when comparing one part of the region with another part of the region is 5% or less, usually 2.5% or less, and most commonly 1% or less, for each component of the coating on a wt.% basis relative to the total weight of the part of the region. In other words, preferably, in an arbitrarily selected region of the coating, the content of each component of the coating, in wt.% relative to the total weight of the arbitrarily selected region of the coating, is 5% or less, usually 2.5% or less, and most commonly 1% or less, even more preferably 0.1% or less, as compared with the total wt.% of that component of the coating in the coating.

The term "washcoat" as used herein is well-known in the field and refers to an adherent coating that is applied to a substrate usually during the production of a catalyst. Preferably, the first coating is a washcoat layer.

The PGM component and/or the Fe component are each typically supported on the inorganic oxide support and/or the OSC material. That is, preferably, particles of the PGM component and/or particles of the Fe component are supported on the inorganic oxide support and/or the OSC material, but do not form part of the inorganic oxide support and/or the OSC material *per se* (i.e. part of the framework of the inorganic oxide support and/or the OSC material). However, at least a portion of the PGM component and/or the Fe component may be present "freely" in the first coating, i.e. not directly supported on the inorganic oxide support and/or the OSC material. The term "supported on" as used herein may encompass that the component, typically in the form of nanoparticles, is directly in contact, and physical and/or chemically bound to the surface of the supporting material. The term "surface of the supporting material" may encompass the surface of the pores within a porous support material, such as an inorganic oxide support and/or OSC material, for example.

Each of the PGM component and the Fe component may typically be present in the form of (nano)particles. The PGM component preferably comprises, more preferably consists essentially of and even more preferably consists of (nano)particles of the PGM metal. However, the Fe component preferably comprises, more preferably consists essentially of and even more preferably consists of (nano)particles of Fe metal and/or one or more oxides of Fe, preferably (nano)particles of one or more oxides of Fe. The oxides of Fe preferably consist of Fe and O.

As will be appreciated, the inorganic oxide support, the OSC material, the PGM component and the Fe component are distinct from one another, i.e. they are independent, distinct components of the first coating. As the Fe component is distinct from the inorganic oxide support and the OSC material, the Fe component therefore does not form part of a (solid solution) mixed oxide in the inorganic oxide support or OSC material.

As will be appreciated, the term "consists essentially of" or "consisting essentially of" as used herein may encompass that further components other than those listed may be present, provided that they do not materially affect the essential characteristics of the species or composition.

The first coating comprises from 0.05 to 1.5 wt.% of the Fe component, calculated based on the total weight of Fe in the Fe component relative to the total weight of the inorganic oxide support and OSC material. That is, the wt.% of the Fe component is calculated on the basis of the Fe, *per se,* whether or not it is in the form of an oxide. In other words, where the Fe component comprises an iron oxide, such as Fe₂O₃, the wt.% of the Fe component is calculated on the basis of the weight of the iron only, excluding the weight of the oxygen.

Preferably, the first coating comprises from 0.1 to 1.2 wt.% of the Fe component, calculated based on the total weight of Fe in the Fe component relative to the total weight of the inorganic oxide support and OSC material, more preferably from 0.15 to 1.0 wt.% of the Fe component, calculated based on the total weight of Fe in the Fe component relative to the total weight of the inorganic oxide support and OSC material, even more preferably from 0.2 to 0.8 wt.% of the Fe component, calculated based on the total weight of Fe in the Fe component relative to the total weight of the inorganic oxide support and OSC material, still more preferably from 0.3 to 0.6 wt.% of the Fe component, calculated based on the total weight of Fe in the Fe component relative to the total weight of the inorganic oxide support and OSC material. It has surprisingly been found that such ranges may provide even greater improvements in oxygen storage capacity and/or (TWC) catalytic activity, even after ageing, without significantly increasing the backpressure caused by the catalytic GPF in use, i.e. relative to a catalytic GPF having a first coating that does not contain the additional Fe component. In particular, it has been found that, while both of these examples provide improved performance, reducing the loading of the Fe component from 1 wt.% to 0.5 wt.%, for example, unexpectedly increases the catalytic performance of the catalytic GPF. By contrast, it may normally be expected that reducing the loading of a catalytic metal would decrease the catalytic activity. Since there is less additional material in the washcoat, the backpressure is also lower for the example containing 0.5 wt.% of the Fe component as described herein compared to that containing 1 wt.% of the Fe component as described herein.

The first coating comprises an inorganic oxide support. Suitable inorganic oxide support materials are known to the skilled reader. The inorganic oxide support can be an oxide of Groups 2, 3, 4, 5, 13 and 14 elements. The inorganic oxide support is preferably a refractory oxide. Refractory oxides exhibit chemical and physical stability at high temperatures, such as the temperatures associated with gasoline engine exhaust. Preferably, the inorganic oxide support comprises one or more of alumina, silica, titania, and mixed oxides or composite oxides thereof, preferably alumina, more preferably gamma alumina.

The inorganic oxide support can be doped with a dopant. The dopant can be selected from the group consisting of La, Sr, Si, Ba, Y, Pr, Nd, Ce, and mixtures thereof. For example, the dopant can be La. The dopant content in the inorganic oxide support can be from 1 to 30 wt.%, from 2 to 25 wt.%, or from 3 to 20 wt.%, based on the total weight of the inorganic oxide support and dopant.

The inorganic oxide support preferably has a D90 of from 0.1 to 25 µm, more preferably from 1 to 15 µm, most preferably from 2 to 10 µm. The inorganic oxide support preferably has a D50 of from 1 to 3 µm. The inorganic oxide support preferably has a D10 of from 0.01 to 2 µm.

Particle size distributions of solid particles can be characterized by the D10, D50 and D90 measurements. In each case the number indicates the percentage amount of particles smaller than the recited value. In other words, a D90 of 1 µm means that 90% of the particles are smaller than 1 µm in diameter. By knowing a D10 and a D90, the range of particles in a distribution of particles can be defined. The characterization of the particle size of a sample by its D10 and D90 values generally defines the breadth of the particle-size distribution. The closer these values are, the narrower the distribution of particle sizes.

The particle size measurements necessary to obtain D10, D50 and D90 values of solid particles such as the inorganic oxide support and the OSC material can be obtained by Laser Diffraction Particle Size Analysis using a Malvern Mastersizer 3000, which is a volume-based technique (i.e., D50 and D90 may also be referred to as D_{V}50 and D_{V}90 (or D(v,0.50) and D(v,0.90)) and applies a mathematical Mie theory model to determine a particle size distribution. The laser diffraction system works by determining diameters for the particles based on a spherical approximation. For the particle size measurements by Laser Diffraction Particle Size Analysis, diluted samples were prepared by sonication in distilled water without surfactant for 30 seconds at 35 watts.

The first coating comprises an OSC material. The term "oxygen storage capacity" as used herein takes on its normal meaning and refers to the ability of materials used as oxygen storage capacity materials in catalysts to store oxygen under lean conditions and to release it under rich conditions. The OSC material can be ceria, a mixed oxide comprising ceria, or a composite oxide comprising ceria. In some embodiments, the OSC material comprises a mixed oxide of cerium and zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art.

Preferably, the OSC material comprises ceria or a mixed oxide comprising ceria, preferably a ceria-zirconia mixed oxide and/or a ceria-zirconia-alumina mixed oxide. Preferably, the OSC material comprises a ceria-zirconia mixed oxide in which the weight ratio of ZrO₂ to CeO₂ is from about 4:1 to about 1:1, more preferably about 2:1.

The OSC material can be doped with a dopant. The dopant can be selected from the group consisting of La, Sr, Si, Ba, Y, Pr, Nd, and mixtures thereof. For example, the dopant can be Nd and/or Pr. The dopant content in the OSC material can be from 1 to 30 wt.%, from 2 to 25 wt.%, or from 3 to 20 wt.%, based on the total weight of the inorganic oxide support and dopant.

The OSC material preferably has a D90 of from 0.01 to 5 µm, more preferably from 0.05 to 3 µm, most preferably from 0.1 to 1 µm. The OSC material preferably has a D50 of from 0.1 to 0.5 µm, preferably from 0.3 to 0.4 µm. The OSC material preferably has a D10 of from 0.01 to 0.4 µm, preferably from 0.15 to 0.25 µm.

Preferably, the PGM component comprises, preferably consists essentially of, more preferably consists of, one or more of Pt, Pd and Rh, preferably Pd and Rh. When the PGM component comprises more than one of Pt, Pd and Rh, the PGMs may typically be present as mixtures thereof. In some embodiments, the PGM component comprises Pt and Rh.

Preferably, the first coating comprises from 0.005 to 10 wt.% of the PGM component, more preferably from 0.001 to 5 wt.% of the PGM component, even more preferably from 0.05 to 3.0 wt.% of the PGM component, relative to the total weight of the first coating. Such amounts may assist in achieving the advantages described herein.

Preferably, the first coating comprises from 0.1 to 50 g/ft³ of the PGM component, more preferably from 1 to 45 g/ft³ of the PGM component, even more preferably from 5 to 40 g/ft³ of the PGM component, even more preferably from 15 to 35 g/ft³ of the PGM component, still more preferably from 20 to 30 g/ft³ of the PGM component, based on the total volume of the substrate. Such amounts may assist in achieving the advantages described herein.

Preferably, the PGM component comprises Pd and Rh and the ratio by weight of the Pd to the Rh is from 1:1 to 8:1, more preferably from 2:1 to 6:1, even more preferably about 4:1. Such amounts may assist in achieving the advantages described herein.

Preferably, the catalytic GPF comprises from 0.1 to 3 g/in³ of the first coating, more preferably from 0.5 to 2.5 g/in³ of the first coating, even more preferably from 1.0 to 2.0 g/in³ of the first coating, based on the total volume of the wall-flow filter substrate. Such amounts may assist in achieving the advantages described herein.

Preferably, the ratio by weight of the OSC material to the inorganic oxide support is from 10:1 to 1:10, more preferably from 8:1 to 1:3, even more preferably from 6:1 to 1:1, still more preferably from 4:1 to 2:1, still more preferably about 3:1. Such amounts may assist in achieving the advantages described herein.

Preferably, the first coating comprises from 0.1 to 2.5 g/in³ of the OSC material, more preferably from 0.5 to 2 g/in³ of the OSC material, even more preferably from 0.8 to 1.5 g/in³ of the OSC material, still more preferably from 1.0 to 1.4 g/in³ of the OSC material, based on the total volume of the wall-flow filter substrate. Such amounts may assist in achieving the advantages described herein.

Preferably, the first coating comprises from 40 to 95 wt.% of the OSC material, more preferably from 50 to 90 wt.% of the OSC material, even more preferably from 60 to 85 wt.% of the OSC material, still more preferably from 70 to 80 wt.% of the OSC material, based on the total weight of the first coating. Such amounts may assist in achieving the advantages described herein.

Preferably, the first coating comprises from 0.05 to 2 g/in³ of the inorganic oxide support, more preferably from 0.1 to 1 g/in³ of the inorganic oxide support, even more preferably from 0.2 to 0.7 g/in³ of the inorganic oxide support, still more preferably from 0.3 to 0.5 g/in³ of the inorganic oxide support, based on the total volume of the wall-flow filter substrate. Such amounts may assist in achieving the advantages described herein.

Preferably, the first coating comprises from 1 to 55 wt.% of the inorganic oxide support, more preferably from 5 to 45 wt.% of the inorganic oxide support, even more preferably from 10 to 40 wt.% of the inorganic oxide support, still more preferably from 15 to 35 wt.% of the inorganic oxide support, based on the total weight of the first coating. Such amounts may assist in achieving the advantages described herein.

Preferably, the catalytic GPF comprises from 0.1 to 50 g/ft³ of the Fe component, calculated based on the total weight of Fe in the Fe component relative to the total volume of the wall-flow filter substrate, preferably from 0.3 to 45 g/ft³ of the Fe component, calculated based on the total weight of Fe in the Fe component relative to the total volume of the wall-flow filter substrate, more preferably from 7 to 30 g/ft³ of the Fe component, calculated based on the total weight of Fe in the Fe component relative to the total volume of the wall-flow filter substrate, still more preferably from 10 to 20 g/ft³ of the Fe component, calculated based on the total weight of Fe in the Fe component relative to the total volume of the wall-flow filter substrate. Such amounts may assist in achieving the advantages described herein.

Preferably, the ratio by weight of the PGM component to the Fe in the Fe component is from 4:1 to 2:5, preferably from 2.8:1 to 1.1:2, more preferably from 2:1 to 0.7:1, even more preferably from 1.95:1 to 1.2:1. Of course, the ratio by weight of the PGM component to the Fe in the Fe component is based on the total weight of PGM and the Fe of the Fe component in the first coating. Such amounts may assist in achieving the advantages described herein.

Preferably, the ratio by weight of the Fe in the Fe component to the OSC material is from 1:35000 to 1:1500, more preferably 1:10000 to 1:3000. Of course, the ratio by weight of the Fe in the Fe component to the OSC material is based on the total weight of the Fe in the Fe component and the OSC material in the first coating. Such amounts may assist in achieving the advantages described herein.

Preferably, the ratio by weight of the Fe in the Fe component to the inorganic oxide support is from 1:12000 to 1:500, more preferably 1:3500 to 1:1000. Of course, the ratio by weight of the Fe in the Fe component to the inorganic oxide support is based on the total weight of the Fe in the Fe component and the inorganic oxide support in the first coating. Such amounts may assist in achieving the advantages described herein.

Preferably, the first coating further comprises a promoter, such as Ba. The promoter may typically be supported on the inorganic oxide support and/or the OSC material. However, at least a portion of the promoter may be present "freely" in the first coating, i.e. not directly supported on the inorganic oxide support and/or the OSC material.

The first coating may further comprise a binder, such as an alumina-based binder. Suitable binders are known to the skilled reader.

In some embodiments, the catalytic GPF comprises one or more further coatings, such as second, third, etc. coatings, disposed on the wall-flow filter substrate. "Disposed on" may take the meaning as defined above in relation to the first coating. If present, the one or more further coatings may be present above and/or below the first coating, relative to the substrate. The one or more further coatings maybe present in a zoned configuration with the first coating, such as with one or more of the coatings being coated from one end of the substrate, and one or more of the other coatings being coated from the other end of the substrate. The coatings may also be overlapping. However, preferably, the catalytic GPF consists essentially of, preferably consists of, the wall-flow filter substrate and the first coating disposed on the wall-flow filter substrate. In other words, preferably the catalytic GPF comprises the first coating as the only washcoat on the substrate. Such a configuration may assist in keeping the backpressure low.

Preferably, the first coating consists essentially of, preferably consists of, the inorganic oxide support, the OSC material, the PGM component, the Fe component, and optionally a promoter and/or a binder.

Preferably, the catalytic GPF is for three-way catalysis.

In a further aspect, the present invention provides a method of manufacturing a catalytic GPF for the treatment of exhaust gas from a gasoline engine, the method comprising:
providing a wall-flow filter substrate;
providing a washcoat slurry, the washcoat slurry comprising:
   an inorganic oxide support;
   an OSC material;
   PGM; and
   Fe ions;
coating a wall-flow filter substrate with the washcoat slurry to form a washcoated substrate; and
calcining the washcoated substrate to form a catalytic GPF;
wherein the washcoat slurry comprises from 0.05 to 1.5 wt.% of the Fe ions, calculated based on the total weight the Fe ions relative to the total weight of the inorganic oxide support and OSC material.

As will be appreciated by the skilled reader, the advantages and preferable features of the first aspect apply equally to this aspect, unless specified otherwise.

The washcoat slurry typically comprises a solvent. Water and organic solvents (methanol, ethanol, propanol, and the like) or their mixtures can be used. Preferably, the solvent comprises, more preferably is, water. In other words, the washcoat slurry is preferably an aqueous slurry. The term "washcoat slurry" as used herein is a term of art and may typically refer to a suspension, preferably an aqueous suspension, of the components of the washcoat slurry.

The PGM may be present in the washcoat slurry as PGM ions. Alternatively, the PGM may already be pre-fixed to the OSC material and/or the inorganic oxide support, i.e. therefore typically being present in the form of nanoparticles supported on the OSC material and/or the inorganic oxide support.

Providing the washcoat slurry preferably comprises combining the inorganic oxide support, the OSC material, the PGM (or, if present as PGM ions, a source of the PGM ions) and a source of the Fe ions in a solvent and, optionally, mixing the washcoat slurry.

The source of PGM ions preferably comprises a PGM salt, such as PGM nitrate, PGM acetate and/or PGM carbonate.

Preferably, the Fe ions are provided by an Fe salt (i.e. the source of Fe ions preferably comprises an Fe salt), preferably wherein the Fe salt comprises one or more of an Fe nitrate salt, Fe carbonate and Fe acetate, preferably Fe nitrate nonahydrate.

As will be appreciated, the Fe ions may typically be present in the washcoat slurry in the form of an Fe complex, i.e. as dissolved Fe ions, such as in the form of a complex of water and Fe. However, it will also be appreciated that the Fe ions may take different forms in the washcoat slurry.

Preferably, the washcoat slurry further comprises a pore former, such as an organic pore former.

The techniques for coating the wall-flow filter substrate with the washcoat slurry to form a washcoated substrate are known in the art. One suitable coating procedure is described in WO1999047260. A washcoat slurry can be coated to the wall-flow filter substrate from the inlet face, from the outlet face, or from both the inlet face and the outlet face.

If more than one coating is being applied, then it may be preferable to dry and/or calcine the wall-flow filter substrate containing one coating before another coating is applied. Calcining may be preceded by a drying step at a lower temperature (such as 100 to 200°C). Calcining is routine in the art and may be performed under usual conditions. For example, calcining the washcoated substrate to form a catalytic GPF preferably comprises heating the washcoated substrate at a temperature of from 400 to 600°C for from 5 to 60 minutes, preferably in a rotational oven or static oven, preferably for at least 10 minutes above 500°C. The heating may be carried out in air or in an inert atmosphere, typically in air.

The provided wall-flow filter substrate may comprise a coated wall-flow filter substrate, i.e., one already having a coating disposed thereon, or, preferably, a "blank", i.e., uncoated, wall-flow filter substrate.

In a further aspect, the present invention provides a catalytic GPF obtained or obtainable by the method of the above aspect. As will be appreciated by the skilled reader, the advantages and preferable features of the above aspects apply equally to this aspect, unless specified otherwise.

In a further aspect, the present invention provides an emission treatment system for the treatment of exhaust gas from a gasoline engine, wherein the emission treatment system comprises the catalytic GPF of the above aspects. As will be appreciated by the skilled reader, the advantages and preferable features of the above aspects apply equally to this aspect, unless specified otherwise. Preferably, the gasoline engine operates under stoichiometric conditions.

In a further aspect, the present invention provides a method of treating an exhaust gas from a gasoline engine, the method comprising:
providing the catalytic GPF of the above aspects; and
contacting the catalytic GPF with an exhaust gas from a gasoline engine.

Typically, contacting the catalytic GPF with an exhaust gas may comprise flowing the exhaust gas through the catalytic GPF. Preferably, the gasoline engine operates under stoichiometric conditions.

The invention will now be described in relation to the following non-limiting examples.

### Comparative Example 1

A three way catalyst washcoat was prepared at a washcoat loading of 1.6 g/in³ (1.2 g/in³ CeZr mixed oxide and 0.4 g/in³ alumina) and a PGM loading of 25 g/ft³ (Pt:Pd:Rh, 0:20:5): comprised of a Rare Earth Oxide (REO) Oxygen Storage Component (OSC) (weight ratio of ZrO₂ to CeO₂ is about 2:1) with a D90 of <1 µm and a La-stabilized alumina component which was wet milled to a D90 of 5 µm.

The completed washcoat was adjusted to a suitable final washcoat solids content in order to coat onto the GPF substrate using Johnson Matthey's precision coating process described in WO 99/47260. The substrate used was a commercially available cordierite GPF substrate of a nominal 63% porosity and 17.5 µm mean pore size and of dimensions 5.66 inch diameter by 4.6 inch in length, 300 cells per square inch and a channel wall thickness of 8 thousandths of an inch. The coating was applied from each end of the substrate with each application covering a length between 50 and 65% of to achieve a fully coated final product with no uncoated region. The coated part was then dried and calcined in the normal way known to the art.

### Example 1

Example 1 was prepared in the same way as Comparative Example 1 but with an additional additive of Iron Nitrate Nonahydrate at a loading of 14.17g/ft³, based on the loading of the Fe *per se* (0.5 wt.% Fe).

### Example 2

Example 2 was prepared in the same way as Comparative Example 1 but with an additional additive of Iron Nitrate Nonahydrate at a loading of 28.34g/ft³, based on the loading of the Fe *per se* (1 wt.% Fe).

### Performance Evaluation

The above formulations were assessed under various conditions for their performance characteristics.

Table 1 below demonstrates the minimal impact to cold flow backpressure with the addition of Iron Nitrate.

**Table 1**

| Sample | Cold Flow Backpressure at 600m³/h (mbar) |
|---|---|
| Comparative Example 1 | 56.3 |
| Example 1 | 57.2 |
| Example 2 | 61.1 |

The formulations were assessed under engine bench testing for oxygen storage capacity and light off conversation. The parts were hydrothermally oven aged under the conditions 1050°C, 2% O₂, 10% H₂O, N2 balance for 4 hours.

For both fresh and hydrothermally aged oxygen storage capacity testing Examples 1 and 2 show higher OSC than Comparative Example 1.

**Table 2**

| | Fresh OSC (mg) | | | | |
|---|---|---|---|---|---|
| Sample | 40kg/hr | 55kg/hr | 75kg/hr | 100kg/hr | 150kg/hr |
| | 380°C inlet | 420°C inlet | 500°C inlet | 570°C inlet | 650°C inlet |
| Comparative Example 1 | 736 | 706 | 662 | 672 | 713 |
| Example 1 | 815 | 804 | 760 | 758 | 795 |
| Example 2 | 878 | 843 | 796 | 803 | 856 |

**Table 3**

| | 1050°C HTA OSC (mg) | | | | |
|---|---|---|---|---|---|
| Sample | 40kg/hr | 55kg/hr | 75kg/hr | 100kg/hr | 150kg/hr |
| | 380°C inlet | 420°C inlet | 500°C inlet | 570°C inlet | 650°C inlet |
| Comparative Example 1 | 86 | 120 | 174 | 232 | 278 |
| Example 1 | 103 | 151 | 197 | 236 | 284 |
| Example 2 | 149 | 221 | 260 | 291 | 365 |

Light off testing showed a benefit to performance for Example 1 and Example 2 over Comparative Example 1 after 1050°C hydrothermal ageing. The T50 (otherwise known as the light-off temperature) is the temperature at which 50% conversion of the particular pollutant is reached.

**Table 4**

| Sample | CO T50 (°C) | NOx T50 (°C) | THC T50 (°C) |
|---|---|---|---|
| Comparative Example 1 | 394 | 391 | 394 |
| Example 1 | 378 | 373 | 382 |
| Example 2 | 380 | 376 | 384 |

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A catalytic gasoline particulate filter (GPF) for the treatment of exhaust gas from a gasoline engine, the catalytic GPF comprising:
a wall-flow filter substrate; and
a first coating disposed on the wall-flow filter substrate, wherein the first coating comprises:
an inorganic oxide support;
an oxygen storage capacity (OSC) material;
a platinum group metal (PGM) component; and
an Fe component;
wherein the first coating comprises from 0.05 to 1.5 wt.% of the Fe component, calculated based on the total weight of Fe in the Fe component relative to the total weight of the inorganic oxide support and OSC material.

2. The catalytic GPF of claim 1, wherein the first coating comprises from 0.1 to 1.2 wt.% of the Fe component, calculated based on the total weight of Fe in the Fe component relative to the total weight of the inorganic oxide support and OSC material, preferably from 0.15 to 1.0 wt.% of the Fe component, calculated based on the total weight of Fe in the Fe component relative to the total weight of the inorganic oxide support and OSC material.

3. The catalytic GPF of claim 1 or claim 2, wherein the inorganic oxide support comprises one or more of alumina, silica, titania, and mixed oxides or composite oxides thereof, preferably alumina.

4. The catalytic GPF of any preceding claim, wherein the OSC material comprises ceria or a mixed oxide comprising ceria, preferably a ceria-zirconia mixed oxide and/or a ceria-zirconia-alumina mixed oxide.

5. The catalytic GPF of any preceding claim, wherein the PGM component comprises one or more of Pt, Pd and Rh, preferably Pd and Rh.

6. The catalytic GPF of any preceding claim, wherein the catalytic GPF comprises from 0.1 to 3 g/in³ of the first coating, based on the total volume of the wall-flow filter substrate.

7. The catalytic GPF of any preceding claim, wherein the catalytic GPF comprises from 0.1 to 50 g/ft³ of the Fe component, calculated based on the total weight of Fe in the Fe component relative to the total volume of the wall-flow filter substrate, preferably from 0.3 to 45 g/ft³ of the Fe component, calculated based on the total weight of Fe in the Fe component relative to the total volume of the wall-flow filter substrate, more preferably from 7 to 30 g/ft³ of the Fe component, calculated based on the total weight of Fe in the Fe component relative to the total volume of the wall-flow filter substrate.

8. The catalytic GPF of any preceding claim, wherein the ratio by weight of the PGM component to the Fe in the Fe component, is from 4:1 to 2:5, preferably from 2.8:1 to 1.1:2, more preferably from 2:1 to 0.7:1, even more preferably from 1.95:1 to 1.2:1.

9. The catalytic GPF of any preceding claim, consisting essentially of, preferably consisting of, the wall-flow filter substrate and the first coating disposed on the wall-flow filter substrate.

10. A method of manufacturing a catalytic GPF for the treatment of exhaust gas from a gasoline engine, the method comprising:
providing a wall-flow filter substrate;
providing a washcoat slurry, the washcoat slurry comprising:
an inorganic oxide support;
an OSC material;
PGM; and
Fe ions;
coating a wall-flow filter substrate with the washcoat slurry to form a washcoated substrate; and
calcining the washcoated substrate to form a catalytic GPF;
wherein the washcoat slurry comprises from 0.05 to 1.5 wt.% of the Fe ions, calculated based on the total weight the Fe ions relative to the total weight of the inorganic oxide support and OSC material.

11. The method of claim 10, wherein the Fe ions are provided by an Fe salt, preferably wherein the Fe salt comprises one or more of an Fe nitrate salt, Fe carbonate and Fe acetate, preferably Fe nitrate nonahydrate.

12. A catalytic GPF obtained or obtainable by the method of claim 10 or 11.

13. An emission treatment system for the treatment of exhaust gas from a gasoline engine, wherein the emission treatment system comprises the catalytic GPF of any of claims 1 to 9 and 12.

14. A method of treating an exhaust gas from a gasoline engine, the method comprising:
providing the catalytic GPF of any of claims 1 to 9 and 12; and
contacting the catalytic GPF with an exhaust gas from a gasoline engine.
